# EUROPÄISCHE PATENTSCHRIFT

(11) **EP 2 848 909 B1**
(45) Veröffentlichungstag und Bekanntmachung des Hinweises auf die Patenterteilung: **07.09.2016**
(21) Anmeldenummer: 14184196.5
(22) Anmeldetag: 10.09.2014
(51) Int. Cl.: G01L 19/14, G01D 11/24

(54) **Gassensor und Kraftfahrzeug mit einem Gassensor**
Gas sensor and motor vehicle with a gas sensor
Capteur de gaz et véhicule automobile équipé d'un capteur de gaz

(30) Priorität: 13.09.2013 DE 102013015218
(43) Veröffentlichungstag der Anmeldung: 18.03.2015
(73) Patentinhaber: Hella KGaA Hueck & Co., 59552 Lippstadt (DE)
(72) Erfinder: Niemann, Thomas, 27753 Delmenhorst (DE); Palloks, Jürgen, 26655 Westerstede (DE); Skwarek, Volker, 23858 Wesenberg (DE); Strackerjan, Falko, 28832 Achim (DE)
(74) Vertreter: Jabbusch, Matthias

(56) Entgegenhaltungen:
- EP-A1- 1 784 066
- WO-A1-93/07457
- WO-A1-96/03629
- WO-A1-2012/023888
- DE-A1-102006 058 301
- DE-A1-102008 004 358
- US-A- 5 692 637

## Beschreibung

Die Erfindung betrifft einen Gassensor mit einem Gehäuse, einer Membran und einem Sensorelement, wobei das Gehäuse einen Messraum und eine Zuluftöffnung aufweist, das Sensorelement in dem Messraum angeordnet ist und die Membran den Messraum von der Zuluftöffnung trennt, wobei der Zuluftöffnung des Gehäuses eine Strömungsleiteinrichtung zugeordnet ist.

Ein gattungsgemäßer Gassensor ist aus der WO 96/03629A1 bekannt. Das Gehäuse weist einen Messraum und eine Zuluftöffnung auf. Das Sensorelement ist in dem Messraum angeordnet. Die Membran trennt den Messraum von der Zuluftöffnung. In der oberen Wandung befindet sich ein Durchbruch, der über einen Kanal den Drucksensor mit der Umgebung verbindet. Der Kanal verläuft in etwa parallel zur Wandung des Gehäuses.

Die US 5,692,632 A offenbart einen Gassensor mit einem Gehäuse und darin angeordneter Elektronik. Dieses Gehäuse wird von einem Filter abgeschlossen. Zu diesem Filter führt eine Zuluftöffnung mit einem Kragen mit einem äußeren Rand. Eine Luftzufuhr erstreckt sich in vertikaler Richtung an dem Gehäuse vorbei. Dadurch soll eine bessere Abschirmung gegen Spritzwasser erfolgen.

Aus der DE 20 2008 004 358 A1 ist eine Druckausgleichseinheit mit einer gaspermeablen Filtermembran bekannt. Oberhalb der Filtermembran ist ein kappenförmiges Abdeckelement vorgesehen, das die Filtermembran überdeckt. Ein weiterer Drucksensor ist aus der WO 93/07457 A1 bekannt. Durch eine poröse Platte wird ein Messelement vor dem direkten Kontakt mit Flüssigkeit geschützt. Durch eine teilweise als Luftkanal ausgebildete Öffnung gelangt der Druck des Mediums auf die poröse Platte und so auf die Oberseite des Messelements.

Derartige Gassensoren sind insbesondere in der Automobilindustrie bekannt und werden als Luftgütesensoren zur Detektion von Luft im Innenraum von Fahrzeugen verwendet.

Bei derartigen Gassensoren, die mit einer gasdurchlässigen Membran verschlossen sind, wird der Gasaustausch zwischen dem Messraum und der Umgebung nur durch die Diffusion und/oder oberflächliche Strömungs- und Verwirbelungseffekte ermöglicht. Dadurch ist der Gasaustausch vergleichsweise langsam und damit auch die Ansprechzeit des Gassensors bzw. des in dem Gassensor vorhandenen Sensorelements. Erschwert wird der Gasaustausch auch dadurch, wenn im Messraum die Temperaturen höher sind als in der Umgebung.

Der Erfindung liegt die Aufgabe zugrunde, das Ansprechverhalten des Gassensors zu verbessern.

Die Lösung dieser Aufgabe erfolgt mit einem Gassensor mit den Merkmalen des Patentanspruchs 1. Vorteilhafte Ausgestaltungen der Erfindung sind in den Unteransprüchen angegeben.

Ein Gassensor mit einem Gehäuse, einer Membran und einem Sensorelement, wobei das Gehäuse einen Messraum und eine Zuluftöffnung aufweist, das Sensorelement in dem Messraum angeordnet ist und die Membran den Messraum von der Zuluftöffnung trennt, ist erfindungswesentlich vorgesehen, dass in der Zuluftöffnung des Gehäuses eine Strömungsleiteinrichtung angeordnet ist und die Strömungsleiteinrichtung eine Kontur aufweist, die einen gleichmäßig breiten, ringförmigen Strömungskanal zwischen der Strömungsleiteinrichtung und der Wand der Zuluftöffnung ausbildet.

Mit einer solchen Strömungsleiteinrichtung wird die Luft- und Gasströmung auf die Membran geführt.

Die Membran ist dabei bevorzugt mit Abstand zu der Zuluftöffnung des Gehäuses angeordnet und an dem Gassensor vorbeistreichende Luft erreicht daher nicht unmittelbar die Membran und das dahinter angeordnete Sensorelement. Dies wird erst durch die Strömungsleiteinrichtung ermöglicht. Diese ist derart ausgelegt und geformt, dass Luft zu der Membran und dem dahinter angeordneten Messraum mit dem Sensorelement geführt wird.

In einer bevorzugten Ausgestaltung der Erfindung ragt die Strömungsleiteinrichtung in das Gehäuse hinein. Dadurch wird eine Führung der Gasströmung in dem Gehäuse besonders effektiv ermöglicht. Weiterhin ragt die Strömungsleiteinrichtung bevorzugt über das Gehäuse hinaus. Dadurch kann insbesondere erreicht werden, dass die sonst flach an dem Gehäuse vorbeiströmende Luft durch die aus der Zuluftöffnung herausstehende Strömungsleiteinrichtung in das Gehäuse hinein gelenkt wird. Bevorzugt ist in der höhenmäßigen Ausdehnung gesehen etwa die Hälfte der Strömungsleiteinrichtung innerhalb des Gehäuses, während die andere Hälfte der Strömungsleiteinrichtung außerhalb des Gehäuses ist. Unter etwa der Hälfte ist eine Abweichung von weniger als +/- 50 %, bevorzugt von weniger als +/- 20 % zu verstehen. In dem Gehäuse ist die Zuluftöffnung bevorzugt kreisförmig und / oder punktsymmetrisch oder symmetrisch zu einer Mittelachse ausgebildet. Auch die Strömungsleiteinrichtung ist bevorzugt symmetrisch zu einer Mittelsenkrechten aufgebaut. Die Einzelnen Komponenten sind dabei kreis- oder ringförmig aufgebaut. Auch andere Ausgestaltungen wie beispielsweise quadratische oder rechteckige Ausgestaltungen sind denkbar. In einer bevorzugten Ausgestaltung ist die Strömungsleiteinrichtung trichterförmig ausgebildet. Der breite Teil des Trichters steht über die Zuluftöffnung hinaus und ist außerhalb der Zuluftöffnung angeordnet. Man könnte auch von einer kegelartigen Ausbildung sprechen, wobei die Flanken im Querschnitt keine Gerade bilden, sondern einen geschwungenen Verlauf haben und sich nach außen erweitern. Die Breite der trichterförmigen Strömungsleiteinrichtung ist an der breitesten Stelle breiter als die Zuluftöffnung im Gehäuse. Die Zuluftöffnung ist dabei bevorzugt topfartig mit einem sich nach außen kreissegmentartig erweiternden Rand ausgebildet. Die Position und Form des kreissegmentartig ausgebildeten Randes korrespondiert zu der Position und Form der Wölbung der Wand der trichterförmigen Strömungsleiteinrichtung.

Die Strömungsleiteinrichtung weist eine Kontur auf, die einen gleichmäßig breiten Strömungskanal oder Strömungsring zwischen der Strömungsleiteinrichtung und der Wand der Zuluftöffnung ausbildet. Bei einer ebenen Ausbildung der Zuluftöffnung ergibt sich ein Strömungsring. Wenn die Zuluftöffnung topfartig bzw. dreidimensional ausgebildet ist, so ergibt sich entlang der Wand, die die Zuluftöffnung ausbildet, ein Strömungskanal. Unter einem gleichmäßig breiten Strömungskanal wird verstanden, dass Abweichungen in der Breite weniger als +/- 50 % von der mittleren Breite des Strömungskanal, insbesondere weniger als +/- 30 % von der mittleren Breite, und besonders bevorzugt weniger als +/- 10 % von der mittleren Breite des Strömungskanals betragen. Besonders bevorzugt ist die Breite überall genau gleich. Der Startpunkt und auch Ausgangspunkt dieses Strömungskanals befindet sich dabei außerhalb der Zuluftöffnung, da die Strömungsleiteinrichtung aus der Zuluftöffnung herausragt.

Erfindungsgemäß weist die Strömungsleiteinrichtung einen inneren Durchgang auf, der bevorzugt ebenfalls als innerer Trichter ausgebildet ist, der auf die Membran gerichtet ist. Bevorzugt ist der Durchmesser des inneren Durchgangs an seiner schmalsten Stelle um weniger als den Faktor 1,5 kleiner oder bevorzugt größer als die Breite des zwischen der Wand der Zuluftöffnung und der Strömungsleiteinrichtung ausgebildeten Kanals. Auf diese Weise ist sichergestellt, dass auch direkt auf die Zuluftöffnung treffende Luft unmittelbar auf die Membran geleitet wird und damit dann auch in den Messraum eintritt.

Das Sensorelement ist bevorzugt näher an der Rückwand des Messraums als an der Membran angeordnet. Dabei ist bevorzugt die sensierende Seite des Sensorelements der Membran zugewandt. Dadurch wird eine besonders gute Anströmung des Sensorelements, insbesondere der sensierenden Seite des Sensorelements erreicht.

Ein weiterer Aspekt der Erfindung besteht in der Bereitstellung eines Kraftfahrzeugs mit einem Gassensor der oben beschriebenen Art. Insbesondere wird der Gassensor zur Luftqualitätskontrolle im Innenraum eines Kraftfahrzeugs eingesetzt. Der Gassensor ist dann bevorzugt mit einer Klimaanlage und/oder Luftzufuhrklappen des Kraftfahrzeugs bzw. der Klimaanlage des Kraftfahrzeugs gekoppelt.

Nachfolgend wird die Erfindung anhand eines in der Zeichnung dargestellten bevorzugten Ausführungsbeispiels weiter erläutert. Im Einzelnen zeigen die schematischen Darstellungen in:
- Figur 1:: Eine perspektivische Ansicht eines erfindungsgemäßen Gassensors;
- Figur 2:: eine Querschnittansicht durch einen erfindungsgemäßen Gassensor bei einer Gasströmung parallel zum Gassensor und
- Figur 3:: eine geschnittene Ansicht durch einen erfindungsgemäßen Gassensor mit einer Strömung senkrecht zum Gassensor.

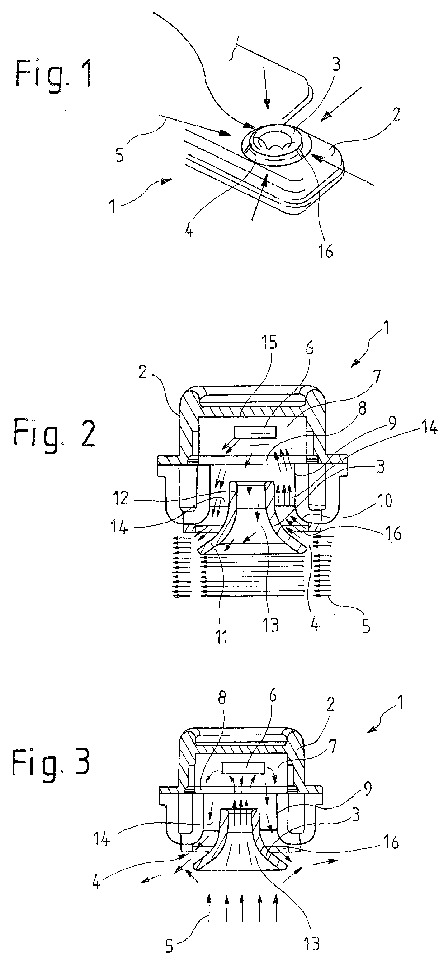

In Figur 1 ist in einer perspektivischen Ansicht ein Gassensor 1 dargestellt. Dieser weist ein Gehäuse 2 auf, in dem eine Zuluftöffnung 4 vorgesehen ist. Die Zuluftöffnung 4 ist kreisförmig ausgebildet. In der Zuluftöffnung 4 ist über Stege 16 eine Strömungsleiteinrichtung 3 gehalten. Diese ragt mit ihrem äußeren Teil 11 über das Gehäuse 2 hinaus und ist mit ihrem inneren Teil 12 in das Gehäuse 2 hineingeführt. Durch die Strömungsleiteinrichtung 3 wird Luft aus allen Richtungen, die hier durch die Pfeile 5 angedeutet ist, verstärkt in den Gassensor 1 hineingeleitet. Dadurch kommt es zu einem schnelleren Luftaustausch in dem Gassensor 1 und die Ansprechzeit des Gassensors 1 verringert sich.

Die Umlenkeinrichtung ist bevorzugt einstückig ausgebildet. In anderen Ausführungsformen kann diese jedoch auch aus mehreren Elementen aufgebaut oder auch als Bestandteil des Gehäuses 2 ausgebildet sein.

In Figur 2 ist ein Querschnitt durch den erfindungsgemäßen Gassensor 1 dargestellt. In dem Gehäuse 2 ist ein Sensorelement 6 angeordnet. Dieses ist hängend oder schwebend in einem Messraum 7 angeordnet. Der Messraum 7 wird nach außen durch eine Membran 8, die gasdurchlässig ist, von der Zuluftöffnung 4 getrennt. Die Zuluftöffnung 4 ist topfartig ausgebildet und weist eine innere Wand 9 auf, die senkrecht ausgebildet ist und zu der Membran 8 führt. An der oberen Kante ist das Gehäuse 2 mit einem Radius ausgebildet, so dass sich ein nach außen kreissegmentartig erweiternder Rand 10 ergibt. Zentral in diese Zuluftöffnung 4 ist die Strömungsleiteinrichtung 3 eingesetzt und dort mit Stegen 16 gehalten. Die Strömungsleiteinrichtung 3 ist hier einstückig ausgebildet. Die Strömungsleiteinrichtung 3 ist trichterartig ausgebildet und mit seinen Konturen etwa äquidistant zu der Wand 9 und dem Rand 10 der Zuluftöffnung 4 angeordnet. Dadurch ergibt sich ein Strömungskanal 14 zwischen der Strömungsleiteinrichtung 3 und der Wand 9, der zu der Membran 8 führt, an der Membran 8 entlang führt und auf der anderen Seite wieder herausführt bzw. ringartig um die Strömungsleiteinrichtung 3 ausgebildet ist. Dieser Strömungskanal oder Strömungsring hat überall etwa die gleiche Breite. Darunter ist zu verstehen, dass evtl. Unterschiede weniger als den Faktor 1,5, bevorzugt weniger als den Faktor 1,2 betragen. In der Figur sind Pfeile 5 eingezeichnet, die die Luftströmung darstellen. Die Strömungsleiteinrichtung 3 weist auch einen inneren Durchgang 13 auf, der ebenfalls trichterartig ausgebildet ist und durch den Luft eintreten oder austreten kann. Im hier in Figur 2 gezeigten Fall der Luftströmung, die im Wesentlichen parallel zu dem Gehäuse 2 erfolgt, wird Luft im Wesentlichen durch den äußeren Strömungskanal 14 eintreten und durch den Durchgang 13 wieder austreten. Der Abstand der vorderen Seite der Strömungsleiteinrichtung 3 zur Membran 8 ist etwa genau so groß wie der Abstand des Trichters bzw. der Strömungsleiteinrichtung 3 zur Seite, d.h. zu den Wänden 9 der Zuluftöffnung 4. Das Sensorelement 6 ist in dem geschlossenen Messraum 7 beabstandet zu der Membran 8 angeordnet. Der Abstand zur Membran 8 ist größer, bevorzugt doppelt so groß wie der Abstand des Sensorelements 6 zu der der Membran 8 gegenüberliegenden Wand 15 des Messraums 7. Die sensierende Seite des Sensorelements 6 ist der Membran 8 zugewandt. Auf diese trifft die Luftströmung bzw. die durch die Membran 8 hindurchtretende Luft. Weiterhin zu erkennen ist, dass die Strömungsleiteinrichtung 3 mit einem inneren Teil 12 in die Zuluftöffnung 4 hineinragt, während ein äußerer Teil 11 der Strömungsleiteinrichtung 3 über die Zuluftöffnung 4 hinaussteht.

In Figur 3 ist ein erfindungsgemäßer Gassensor 1 dargestellt, der dem in Figur 2 dargestellten Gassensor 1 entspricht. Auch hier ist der Gassensor 1 in einer Querschnittsansicht dargestellt. Im Unterschied zur Figur 2 ist hier jedoch die Strömung senkrecht auf den Gassensor 1 gerichtet. Entsprechend sind die Pfeile 5, die die Luftströmung wiedergeben anders ausgebildet. Im Übrigen entsprechen gleiche Bezugszeichen gleichen Teilen. Es wird insofern auf die Beschreibung zu den Figuren 1 und 2 Bezug genommen. Die Luftströmung 4 tritt hier im Wesentlichen durch den sich auch im inneren Durchgang 13 trichterförmig erweiternden Bereich der Strömungsleiteinrichtung 3 ein und wird im Endbereich der Strömungsleiteinrichtung 3 auf die Membran 8 geleitet. Die Luft tritt durch die Membran 8 hindurch und trifft auf die sensitive Seite des Sensorelements 6 in dem Messraum 7. Die Luft strömt dann im Wesentlichen in den äußeren Kanälen bzw. im äußeren ringförmigen Kanal 14 zurück. Die Breite des Durchgangs 13 im vorderen Bereich, d.h. dem der Membran 8 zugewandten Bereich ist etwa genauso breit wie die Breite des Strömungskanals 14 im Querschnitt.

Insgesamt wird durch die Erfindung erreicht, dass der Gasaustausch innerhalb des Messraums 7 optimiert wird. Dies erfolgt trotz der typischerweise höheren Temperatur innerhalb des Messraums 7 im Vergleich zur Temperatur außerhalb des Messraums 7. Dadurch wird ein schnelleres Ansprechverhalten des Sensorelements 6 erreicht. Durch die Verbesserung des Gasaustausches im Hinblick auf das Austauschvolumen wird auch eine verbesserte Sensibilität erreicht. Mit der erfindungsgemäßen Strömungsleiteinrichtung 3 wird die Gasströmung von allen Seiten richtungsunabhängig erfasst. Der Einbau des Sensors kann daher ebenfalls strömungsrichtungsunabhängig erfolgen.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Gassensor mit einem Gehäuse (2), einer Membran (8) und einem Sensorelement (6), wobei das Gehäuse (2) einen Messraum (7) und eine Zuluftöffnung (4) aufweist, das Sensorelement (6) in dem Messraum (7) angeordnet ist und die Membran (8) den Messraum (7) von der Zuluftöffnung (4) trennt, wobei der Zuluftöffnung (4) des Gehäuses eine Strömungsleiteinrichtung (3) zugeordnet ist,
**dadurch gekennzeichnet,**
**dass** die Strömungsleiteinrichtung (3) in der Zuluftöffnung (4) des Gehäuses angeordnet ist,
**dass** die Strömungsleiteinrichtung (3) eine Kontur aufweist, die einen gleichmäßig breiten, ringartigen Strömungskanal (14) zwischen der Strömungsleiteinrichtung (3) und der Wand (9) der Zuluftöffnung (4) ausbildetund
**dass** die Strömungsleiteinrichtung (3) einen inneren Durchgang (13) ausbildet.

2. Gassensor nach Anspruch 1, **dadurch gekennzeichnet, dass** die Strömungsleiteinrichtung (3) in das Gehäuse (2) hineinragt.

3. Gassensor nach Anspruch 1 oder 2, **dadurch gekennzeichnet, dass** die Strömungsleiteinrichtung (3) über das Gehäuse (2) hinaussteht.

4. Gassensor nach einem der vorhergehenden Ansprüchen, **dadurch gekennzeichnet, dass** die Zuluftöffnung (4) und die Strömungsleiteinrichtung (3) symmetrisch zu einer Mittelsenkrechten ausgebildet sind.

5. Gassensor nach einem der vorhergehenden Ansprüche, **dadurch gekennzeichnet, dass** die Strömungsleiteinrichtung (3) trichterförmig ausgebildet ist.

6. Gassensor nach einem der vorhergehenden Ansprüche, **dadurch gekennzeichnet, dass** die Zuluftöffnung (4) topfartig mit einem sich nach außen kreissegmentartig erweiternden Rand (10) ausgebildet ist.

7. Gassensor nach einem der vorhergehenden Ansprüche, **dadurch gekennzeichnet, dass** der innere Durchgang (13) der Strömungsleiteinrichtung (3) trichterartig ausgebildet ist.

8. Gassensor nach einem der vorhergehenden Ansprüche, **dadurch gekennzeichnet, dass** der Durchmesser des inneren Durchgangs (13) an seiner schmalsten Stelle um weniger als den Faktor 1,5 kleiner oder größer ist als die Breite des zwischen der Wand (9) der Zuluftöffnung (4) und der Strömungsleiteinrichtung (3) ausgebildeten Strömungskanals (14).

9. Kraftfahrzeug, **dadurch gekennzeichnet, dass** in dem Kraftfahrzeug ein Gassensor nach einem der vorhergehenden Ansprüche angeordnet ist.

## Claims

1. A gas sensor with a housing (2), a diaphragm (8) and a sensor element (6), wherein the housing (2) features a measuring chamber (7) and a supply air opening (4), wherein the sensor element (6) is arranged in the measuring chamber (7) and the diaphragm (8) separates the measuring chamber (7) from the supply air opening (4), and wherein a flow guide (3) is assigned to the supply air opening (4) of the housing,
**characterized in**
**that** the flow guide (3) is arranged in the supply air opening (4) of the housing, in
**that** the flow guide (3) has a contour that forms a ring-like flow channel (14) of uniform width between the flow guide (3) and the wall (9) of the supply air opening (4), and in
**that** the flow guide (3) forms an inner passage (13).

2. The gas sensor according to claim 1, **characterized in that** the flow guide (3) protrudes into the housing (2) .

3. The gas sensor according to claim 1 or 2, **characterized in that** the flow guide (3) protrudes beyond the housing (2).

4. The gas sensor according to one of the preceding claims, **characterized in that** the supply air opening (4) and the flow guide (3) are realized symmetrical referred to a vertical center line.

5. The gas sensor according to one of the preceding claims, **characterized in that** the flow guide (3) is realized in a funnel-shaped fashion.

6. The gas sensor according to one of the preceding claims, **characterized in that** the supply air opening (4) is realized in a pot-like fashion with an edge (10) that widens outward in the form of a segment of a circle.

7. The gas sensor according to one of the preceding claims, **characterized in that** the inner passage (13) of the flow guide (3) is realized in a funnel-like fashion.

8. The gas sensor according to one of the preceding claims, **characterized in that** the diameter of the inner passage (13) is at its narrowest point smaller or larger than the width of the flow channel (14) formed between the wall (9) of the supply air opening (4) and the flow guide (3) by less than a factor of 1.5.

9. A motor vehicle, **characterized in that** a gas sensor according to one of the preceding claims is arranged in the motor vehicle.

## Revendications

1. Capteur de gaz avec un boîtier (2), une membrane (8) et un élément capteur (6), dans lequel le boîtier (2) présente une chambre de mesure (7) et un orifice d'arrivée d'air (4), l'élément capteur (6) étant disposé dans la chambre de mesure (7) et la membrane (8) séparant la chambre de mesure (7) de l'orifice d'arrivée d'air (4), dans lequel un dispositif de guidage d'écoulement (3) est associé à l'orifice d'arrivée d'air (4) du boîtier ,
**caractérisé en ce que**
le dispositif de guidage d'écoulement (3) est disposé dans l'orifice d'arrivée d'air (4) du boîtier,
**en ce que** le dispositif de guidage d'écoulement (3) présente un contour qui forme un canal d'écoulement (14) annulaire d'une largeur régulière entre le dispositif de guidage d'écoulement (3) et la paroi (9) de l'orifice d'arrivée d'air (4), et
**en ce que** le dispositif de guidage d'écoulement (3) forme un passage intérieur (13).

2. Capteur de gaz selon la revendication 1, **caractérisé en ce que** le dispositif de guidage d'écoulement (3) pénètre à l'intérieur du boîtier (2).

3. Capteur de gaz selon la revendication 1 ou 2, **caractérisé en ce que** le dispositif de guidage d'écoulement (3) dépasse du boîtier (2).

4. Capteur de gaz selon l'une des revendications précédentes, **caractérisé en ce que** l'orifice d'arrivée d'air (4) et le dispositif de guidage d'écoulement (3) sont réalisés de façon symétrique à une médiatrice.

5. Capteur de gaz selon l'une des revendications précédentes, **caractérisé en ce que** le dispositif de guidage d'écoulement (3) est réalisé en forme d'entonnoir.

6. Capteur de gaz selon l'une des revendications précédentes, **caractérisé en ce que** l'orifice d'arrivée d'air (4) est réalisé à la manière d'un pot avec un bord (10) s'élargissant vers l'extérieur à la manière d'un segment de cercle.

7. Capteur de gaz selon l'une des revendications précédentes, **caractérisé en ce que** le passage intérieur (13) du dispositif de guidage d'écoulement (3) est réalisé à la manière d'un entonnoir.

8. Capteur de gaz selon l'une des revendications précédentes, **caractérisé en ce que** le diamètre du passage intérieur (13) est inférieur ou supérieur, à son emplacement le plus étroit, de l'ordre de moins du facteur de 1,5 par rapport à la largeur du canal d'écoulement (14) formé entre la paroi (9) de l'orifice d'arrivée d'air (4) et le dispositif de guidage d'écoulement (3).

9. Véhicule automobile, **caractérisé en ce qu'**un capteur de gaz selon l'une des revendications précédentes est disposé dans le véhicule automobile.
